# FASCICULE DE BREVET EUROPEEN

(11) **EP 1 427 959 B1**
(45) Date de publication et mention de la délivrance du brevet: **06.06.2007**
(21) Numéro de dépôt: 02783173.4
(22) Date de dépôt: 18.09.2002
(51) Int. Cl.: F16L 37/084

(54) **DISPOSITIF DE RACCORDEMENT INSTANTANE**
SCHNELLVERBINDUNGSVORRICHTUNG
QUICK COUPLING DEVICE

(30) Priorité: 21.09.2001 FR 0112202
(43) Date de publication de la demande: 16.06.2004
(73) Titulaire: LEGRIS SA, 35000 Rennes (FR)
(72) Inventeur: VALLEE, Christophe, F-35230 Orgeres (FR)
(74) Mandataire: Lavialle, Bruno François Stéphane
(86) Numéro de dépôt international: PCT/FR2002/003187
(87) Numéro de publication internationale: WO 2003/027562

(56) Documents cités:
- EP-A- 1 067 324
- DE-A- 19 800 050
- US-A- 5 673 945
- US-A- 5 911 443

## Description

La présente invention concerne un dispositif de raccordement instantané d'une extrémité de conduite à un élément d'un circuit de transport de fluide tel qu'une autre conduite, un élément émetteur de fluide comme une pompe, ou un élément récepteur de fluide comme un réservoir. Plus particulièrement, l'invention concerne un dispositif de raccordement instantané du type cartouche destiné à réaliser l'ancrage d'une extrémité de conduite dans un alésage du corps de l'élément ainsi que l'étanchéité du raccord formé.

On connaît des dispositifs de raccordement-instantané comprenant un insert tubulaire possédant des moyens pour son ancrage permanent dans l'élément rigide, des moyens de retenue de l'extrémité de conduite, et un joint d'étanchéité. Les moyens d'ancrage sont le plus souvent réalisés sous la forme de dents de sapins ménagées sur la surface extérieure de l'insert tubulaire pour s'opposer au retrait axial de cet insert lorsqu'il est introduit à l'intérieur d'un alésage de l'élément de circuit. Les moyens de retenue sont généralement réalisés sous la forme d'une rondelle à- denture intérieure dont les dents (ou griffes) sont soulevées par flexion lors de l'introduction de l'extrémité de conduite dans l'insert tubulaire et tendent à mordre la conduite pour s'opposer à son extraction. Le joint d'étanchéité, le plus souvent torique, est associé à l'insert tubulaire de manière à être comprimé entre la paroi de l'alésage et la surface extérieure de l'extrémité de conduite.

Lorsque le raccord est destiné à être soumis à de fortes sollicitations, par exemple quand il est implanté dans un circuit où un fluide circule à une pression relativement élevée, la rondelle utilisée est très raide de manière à pouvoir s'opposer à des efforts d'extraction importants. Il existe cependant un risque que l'extrémité de conduite s'écrase légèrement de sorte que toutes les dents de la rondelle ne mordent pas correctement dans la surface externe de l'extrémité de conduite. Ce phénomène peut notamment résulter d'une ovalisation de l'extrémité de conduite due à un effort de flexion exercé sur celle-ci à l'extérieur du raccord.

Pour obvier à cet inconvénient, on a pensé à soutenir l'extrémité de conduite au moyen d'une fourrure rigide insérée dans celle-ci.

Des inserts ou cartouches de raccordement pour connexion rapide pourvus d'une fourrure interne sont connus notamment par les documents US 5,673,945, qui décrit un dispositif selon le préambule de la revendication 1, et DE 198 00 050.

La question qui reste mal résolue par ces dispositifs connus est celle de l'étanchéité de la connexion qui, en général, demande soit de prévoir deux éléments d'étanchéité soit de munir l'élément dans l'alésage d'un joint indépendant de la cartouche, ce qui va à l'encontre d'une conception de raccord en cartouche.

Pour pallier cet inconvénient, la présente invention a pour objet un dispositif de raccordement instantané selon la revendication 1.

Le caractère libérable de la liaison permet de conférer à la fourrure un rôle temporaire, par exemple de support d'un joint, qui rassemble l'insert, avec ses moyens d'ancrage et de retenue d'une conduite, la fourrure et le joint sous la forme d'une cartouche formant un sous-ensemble cohérent apte à une installation automatisée.

Avantageusement alors, la fourrure tubulaire possède un épaulement externe pour former une butée d'entraînement de la fourrure tubulaire par une extrémité de conduite engagée dans le dispositif de raccordement (ou un outil approprié) et la fourrure tubulaire comporte au-delà de cet épaulement une extrémité qui a un diamètre externe sensiblement égal au diamètre externe de l'extrémité de conduite et qui s'étend en saillie à l'extérieur de l'insert tubulaire pour former un support pour le joint d'étanchéité.

Les moyens de liaison libérables étant de préférence une zone de liaison à rupture, sous l'effort d'introduction de l'extrémité de conduite dans l'insert tubulaire (ou d'un poinçon lors du montage du dispositif de raccordement dans l'élément rigide), la zone à rupture, qui présente une plus faible résistance mécanique que la fourrure et l'insert, se rompt et libère la fourrure qui est entraînée par l'extrémité de-conduite ou par l'outil. Le joint d'étanchéité est immobilisé axialement dans l'alésage, donc n'est pas entraîné par la fourrure de sorte que l'extrémité de conduite peut se substituer à l'extrémité de la fourrure qui portait le joint et le joint d'étanchéité assure une fonction d'étanchéité entre l'extrémité de conduite et l'alésage de l'élément rigide. La fourrure exerce ainsi une double fonction, de soutien de la conduite lors de la connexion, de solidarisation de l'insert et du joint d'étanchéité avant la connexion.

D'autres caractéristiques et avantages de l'invention ressortiront à la lecture de la description qui suit d'un mode de réalisation particulier non limitatif de l'invention.

Il sera fait référence aux dessins annexés, parmi lesquels :

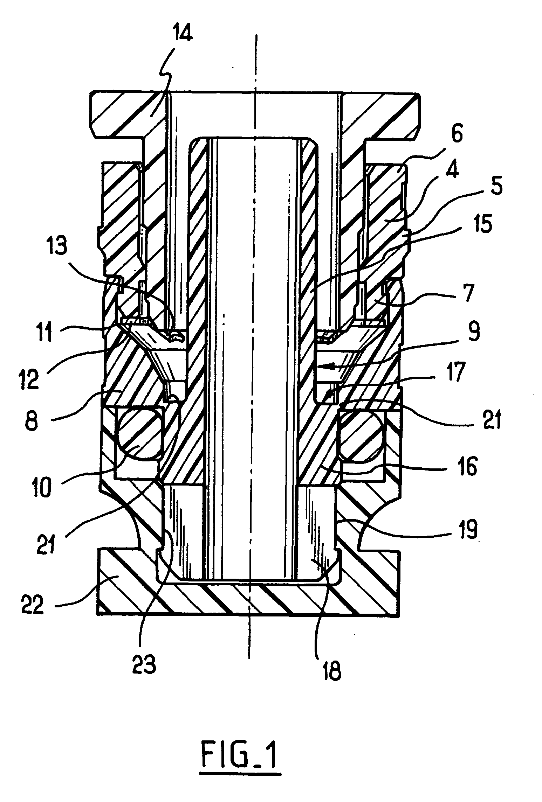

- la figure 1 est une vue en coupe longitudinale d'un dispositif de raccordement conforme à l'invention,
- la figure 2 est une vue analogue à la figure 1 du dispositif de raccordement inséré dans un alésage d'un élément d'un circuit, avant connexion d'une extrémité de conduite,
- la figure 3 est une vue analogue à la figure 2 après connexion d'une extrémité de conduite dans le dispositif de raccordement.

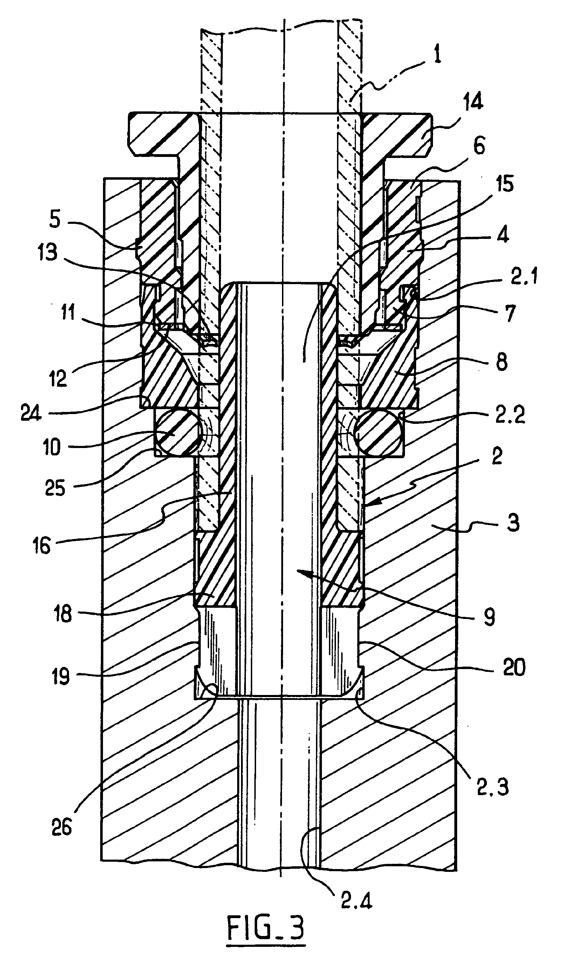

En référence aux figures, le dispositif de raccordement ici décrit est destiné à permettre la liaison entre une extrémité de conduite, représentée en trait mixte double et référencée 1 à la figure 3, et un alésage généralement désigné en 2 d'un élément 3 d'un circuit de transport de fluide, tel qu'une autre conduite, un élément récepteur de fluide comme un réservoir ou un élément émetteur de fluide comme une pompe.

Le dispositif de raccordement instantané comprend un insert tubulaire 4 destiné à être implanté dans l'alésage 2 de l'élément 3 pour y accueillir l'extrémité de conduite 1. L'insert tubulaire 4 est pourvu extérieurement de moyens de son ancrage dans l'alésage 2. Les moyens d'ancrage comprennent ici un relief annulaire 5 en dent de sapin ménagé sur la surface externe de l'insert tubulaire 4 pour s'opposer au retrait axial de cet insert tubulaire 4 lorsque celui-ci est introduit à l'intérieur d'une première section de l'alésage 2 de l'élément 3.

L'insert tubulaire 4 possède une première extrémité 6 dans laquelle l'extrémité de conduite est destinée à être introduite, et une deuxième extrémité 7 qui est associée à une bague 8 de liaison à une fourrure tubulaire 9 et à un joint d'étanchéité 10 destiné à assurer l'étanchéité du raccordement.

L'extrémité 7 de l'insert tubulaire 4 est introduite et maintenue à force dans la bague 8 selon une technique connue de clipsage. L'extrémité 7 de l'insert tubulaire 4 et la bague 8 définissent entre elles une gorge 11 qui constitue un logement pour une rondelle 12 pourvue intérieurement de dents 13 (ou griffes) d'accrochage et de retenue de l'extrémité de conduite 1 qui sera introduite dans le dispositif de raccordement. Des moyens d'ancrage de la bague 8 dans l'alésage 2 peuvent être prévus sur la surface extérieure de la bague 8.

Un poussoir tubulaire 14 est monté de façon connue en elle-même dans l'insert tubulaire 4 pour coulisser entre une position enfoncée dans laquelle le nez du poussoir tubulaire 14 vient soulever les dents 13 de la rondelle 12 et une position en retrait dans laquelle le nez du poussoir tubulaire 14 est écarté des dents 13 de la rondelle 12. Le poussoir tubulaire 14 a un diamètre interne sensiblement égal au diamètre extérieur de l'extrémité de conduite 1.

La fourrure tubulaire 9 comprend un premier tronçon 15 ayant un diamètre externe sensiblement égal au diamètre interne de l'extrémité de conduite 1 pour pouvoir être introduit dans celle-ci et un deuxième tronçon 16 qui a un diamètre externe sensiblement égal au diamètre externe de l'extrémité de conduite 1 et qui est relié au premier tronçon 15 par un épaulement 17 formant une butée à l'enfoncement de la fourrure tubulaire 9 dans l'extrémité de conduite 1. Le deuxième tronçon 16 possède une extrémité libre 18 pourvue de moyens de son encliquetage dans l'alésage 2 de l'élément 3. Ces moyens comprennent ici une gorge externe 19 destinée à coopérer avec un redan annulaire 20 ménagé de façon correspondante dans l'alésage 2. L'extrémité libre 18 du deuxième tronçon 16 est fendue axialement pour faciliter sa déformation radiale et son introduction dans la partie de l'alésage 2 rétreinte par le redan annulaire 20. L'extrémité libre 18 du deuxième tronçon 16 est également biseautée pour faciliter son introduction dans l'alésage 2. D'autres moyens de fixation analogues peuvent être substituer aux moyens d'encliquetage, comme des moyens de cramponnage.

La fourrure tubulaire 9 et la bague 8 sont ici réalisées en une seule pièce en un matériau thermoplastique plus rigide que l'extrémité de conduite 1 et sont reliées l'une à l'autre au niveau de l'épaulement 17 par une zone à rupture 21. Par zone à rupture on entend une zone qui possède une résistance mécanique plus faible que celle de la bague 8 et de la fourrure tubulaire 9 de manière qu'elle puisse se rompre sous l'effort d'introduction de l'extrémité de conduite 1 dans le dispositif de raccordement et libérer ainsi axialement la fourrure tubulaire 9.

La bague 8 positionne la fourrure tubulaire 9 de telle manière que la fourrure tubulaire 9 s'étende coaxialement à la rondelle 12 et que le premier tronçon 15 de la fourrure tubulaire 9 s'étende dans l'ouverture de passage de la rondelle 12 et le deuxième tronçon 16 s'étende en saillie à l'extérieur de l'insert tubulaire 4 et de la bague 8.

Le joint d'étanchéité 10 est monté sur le deuxième tronçon 16 de la fourrure tubulaire 9 de manière adjacente à la bague 8.

Un capuchon de protection 22 est monté de manière amovible sur l'extrémité libre 18 du deuxième tronçon 16 pour coiffer le joint d'étanchéité 10 et protégé celui-ci. En l'espèce, le capuchon 22 comporte un relief annulaire interne 23 pour coopérer avec la gorge 19.

Avant montage du dispositif de raccordement instantané sur l'élément 3, l'élément 3 doit être correctement alésé. L'alésage 2 est divisé axialement en quatre sections, à savoir une section de grand diamètre 2.1 qui débouche à l'extérieur et est destiné à recevoir l'insert tubulaire 4 et la bague 8, une section de plus petit diamètre 2.2 destinée à recevoir le joint 10, une section 2.3 qui possède un diamètre sensiblement égal au diamètre externe de l'extrémité de conduite et du deuxième tronçon 16 de la fourrure tubulaire 9 et qui est pourvue du redan annulaire 20, et une section 2.4 de diamètre sensiblement égal au diamètre interne de la fourrure tubulaire 9. Des faces radiales d'appui 24, 25, 26 s'étendent respectivement entre les sections 4.1 et 4.2, 4.2 et 4.3, et 4.3 et 4.4.

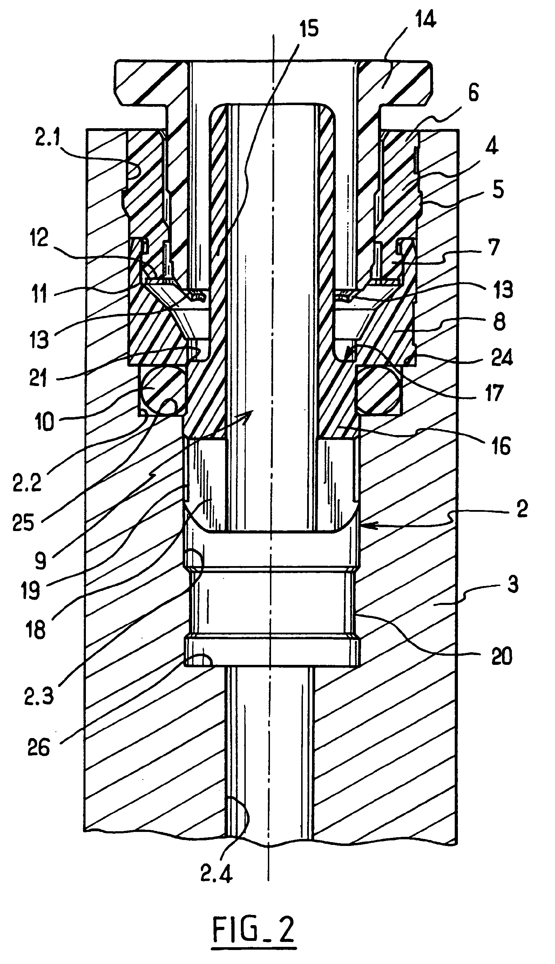

Après retrait du capuchon 22, le dispositif de raccordement est introduit dans l'alésage 2 par l'extrémité libre 18 du deuxième tronçon 16 de la fourrure interne 9. Le dispositif de raccordement est correctement monté lorsque la bague 8 arrive en butée contre la face radiale d'appui 24, le joint d'étanchéité 10 étant alors reçu dans la section 2.2 de l'alésage 2 et l'extrémité libre 18 du deuxième tronçon 16 de la fourrure tubulaire 9 étant elle reçue dans la section 2.3 de l'alésage 2 (voir figure 2).

La mise en place de la-fourrure tubulaire 9 est achevée au moyen d'un poinçon (non-visible sur les figures) introduit dans le dispositif de raccordement. Le poinçon arrivant en butée contre la fourrure tubulaire 9 et l'introduction du poinçon se poursuivant, la zone à rupture 21 cède sous l'effort exercé par le poinçon sur l'épaulement 17. La fourrure tubulaire 9 est alors libérée axialement et entraînée avec le poinçon jusqu'à ce que l'extrémité libre 18 du deuxième tronçon 16 vienne en butée contre l'épaulement 26. L'extrémité libre 18 du deuxième tronçon 16 de la fourrure tubulaire 9 s'est alors encliquetée dans la section 2.3 de l'alésage 2 (le redan annulaire 20 est reçu dans la gorge 19). Le joint d'étanchéité 10 a lui été retenu par l'épaulement 25 pendant que la fourrure était entraînée par le poinçon (voir figure 3).

La connexion de l'extrémité de conduite 1 est réalisée en introduisant l'extrémité de conduite 1 dans le poussoir tubulaire 14 de telle manière que l'extrémité de conduite 1 soit enfilée sur le premier tronçon 16 de la fourrure tubulaire 9.

Lors de l'enfilement de l'extrémité de conduite 1 sur le premier tronçon 15, l'extrémité de conduite 1 passe dans l'ouverture de passage de la rondelle 12 en provoquant la déformation de celle-ci et le soulèvement des dents 13 qui viennent en appui sur la surface externe de l'extrémité de conduite 1.

L'enfoncement de la fourrure tubulaire 9 dans l'extrémité de conduite 1 s'achève lorsque la face terminale de l'extrémité de conduite 1 arrive en butée contre l'épaulement 17.

A ce stade, l'extrémité de conduite 1 est connectée et a été engagée dans le joint d'étanchéité 10 qui est alors comprimé entre la surface externe de l'extrémité de conduite 1 et la paroi délimitant la section 2.2 de l'alésage 2.

En position connectée, le premier tronçon 15 de la fourrure tubulaire 9 soutient l'extrémité de conduite en regard du joint d'étanchéité 10 et surtout de la rondelle 12. Ceci permet de limiter les déformations radiales de l'extrémité de conduite 1. Ceci améliore la résistance de la retenue exercée par les dents 13 de la rondelle 12 en renforçant leur pouvoir de pénétration dans l'extrémité de conduite 1 et également la qualité de l'étanchéité procurée par le joint d'étanchéité 10.

Pour déconnecter l'extrémité de conduite 1 du dispositif de raccordement, le poussoir 14 est enfoncé pour soulever les dents 13 et l'extrémité de conduite est extraite du dispositif de raccordement. La fourrure tubulaire 9 reste en position dans l'alésage 2 du fait de son encliquetage dans la troisième section 2.3 de celui-ci.

Bien entendu, l'invention n'est pas limitée au mode de réalisation décrit et on peut y apporter des variantes de réalisation sans sortir du cadre de l'invention tel que défini par les revendications.

En particulier, d'autres types de moyens de liaison de la fourrure tubulaire 9 à l'insert tubulaire 4 peuvent être utilisés, tels que des moyens d'encliquetage ou clipsage, le collage ou le soudage partiel, tous ces moyens ayant la faculté d'être libérables notamment sous l'effet d'un effort tendant à séparer axialement la fourrure de l'insert.

En outre, on peut prévoir que la fourrure tubulaire 9 soit définitivement mise en place lors de l'introduction de l'extrémité de conduite.

## Revendications

1. Dispositif de raccordement instantané pour le raccordement d'une extrémité de conduite à un alésage d'un élément de circuit, comprenant un insert tubulaire (4) pourvu de moyens externes d'ancrage (5) du dispositif dans l'alésage de l'élément de circuit, une rondelle déformable à griffes (12) qui délimite une ouverture de passage et qui est logée dans l'insert tubulaire, au moins un joint d'étanchéité (10) destinée à s'étendre entre l'extrémité dé conduite et l'élément de circuit, et une fourrure tubulaire (9) reliée par des moyens de liaison (8, 21) à l'insert tubulaire (4) pour s'étendre dans l'ouverture de passage de la rondelle coaxialement à celle-ci, **caractérisé en ce que** les moyens de liaison sont libérables par introduction dans l'insert d'un organe tubulaire et **en ce que** la fourrure tubulaire (9) comporte une extrémité (16) qui a un diamètre externe sensiblement égal au diamètre externe de l'extrémité de conduite et qui s'étend en saillie à l'extérieur de l'insert tubulaire (4) pour former un support pour le joint d'étanchéité (10) avant montage du dispositif dans l'alésage de l'élément de circuit.

2. Dispositif de raccordement selon la revendication 1, **caractérisé en ce que** l'extrémité (16) de la fourrure tubulaire (9) définit avec cette dernière un épaulement externe (17) pour former un moyen d'entraînement de la fourrure tubulaire par rapport à l'insert tubulaire (4) par une extrémité de conduite engagée dans le dispositif de raccordement.

3. Dispositif de raccordement selon l'une des revendications précédentes, **caractérisé en ce que** les moyens de liaison (21) sont du type à rupture.

4. Dispositif de raccordement selon la revendication 3, **caractérisé en ce que** les moyens de liaison comprennent une bague (8) encliquetée sur une extrémité (7) de l'insert tubulaire (4) et reliée à la fourrure tubulaire (9) par une zone à rupture (21).

5. Dispositif de raccordement instantané selon l'une quelconque des revendications précédentes, **caractérisé en ce que** la fourrure tubulaire (9) est pourvue extérieurement de moyens (19) de son ancrage dans un alésage d'un élément de circuit destiné à recevoir le dispositif de raccordement.

6. Dispositif de raccordement instantané selon l'une quelconque des revendications précédentes, **caractérisé en ce que** la fourrure tubulaire (9) est reliée à l'insert tubulaire (4) en aval de la rondelle (12) par référence à un sens d'introduction d'une extrémité de conduite dans le dispositif de raccordement.

7. Dispositif de raccordement instantané selon l'une quelconque des revendications précédentes, **caractérisé en ce qu'**il comprend un capuchon de protection (22) monté de façon amovible sur le dispositif de raccordement pour coiffer le joint d'étanchéité (10).

## Claims

1. A quick coupling device for coupling a pipe end to a hole of a circuit element, comprising a tubular insert (4) provided with external anchor means (5) for anchoring the tubular insert in the circuit element hole, a deformable claw washer (12) which defines a through opening and which is received in the tubular insert, at least one sealing gasket (10) to extend between the pipe end and the circuit element, and a tubular bushing (9) connected by connection means (8, 21) to the tubular insert (4) to extend coaxially through the opening in the washer, the device being **characterized in that** the connection means are releasable by inserting a tubular member into the insert and **in that** the tubular bushing (9) has an end (16) of outside diameter substantially equal to the outside diameter of the pipe end and which projects out from the tubular insert (4) to form a support for the sealing gasket (10) before the mounting of the device in the circuit element hole.

2. A coupling device according to claim 1, **characterized in that** the end (16) of the tubular bushing (9) cooperates with the tubular bushing (9) to define an outwardly-directed shoulder (17) to form means enabling the tubular bushing to be driven relative to the tubular insert (4).

3. A coupling device according to any preceding claim, **characterized in that** the connection means (21) are of the breakable type.

4. A coupling device according to claim 3, **characterized in that** the connection means comprise a ring (8) snap-fastened on one end (7) of the tubular insert (4) and connected to the tubular bushing (9) via a breakable zone (21).

5. A quick coupling device according to any preceding claim, **characterized in that** the tubular bushing (9) is provided on the outside with means (19) for anchoring it in a bore of a circuit element that is to receive the coupling device.

6. A quick coupling device according to any preceding claim, **characterized in that** the tubular bushing (9) is connected to the tubular insert (4) downstream from the washer (12) relative to the direction in which a pipe end is inserted into the coupling device.

7. A quick coupling device according to any preceding claims, **characterized in that** it includes a protective cap (22) removably mounted on the coupling device to cover the sealing gasket (10).

## Patentansprüche

1. Schnellverbindungsvorrichtung für die Verbindung eines Leitungsendes mit einer Bohrung eines Leitungselements, umfassend einen rohrförmigen Einsatz (4), der mit äußeren Verankerungsmitteln (5) zur Verankerung der Vorrichtung in der Bohrung des Leitungselements versehen ist, eine verformbare Krallenscheibe (12), die eine Durchgangsöffnung begrenzt und in den rohrförmigen Einsatz eingesetzt ist, mindestens eine Dichtung (10), die dazu bestimmt ist, sich zwischen dem Leitungsende und dem Leitungselement zu erstrecken, sowie eine rohrförmige Buchse (9), die über Verbindungsmittel (8, 21) mit dem rohrförmigen Einsatz (4) verbunden ist, um sich in der Durchgangsöffnung der Scheibe koaxial zu derselben zu erstrecken, **dadurch gekennzeichnet, dass** die Verbindungsmittel durch Einführen eines rohrförmigen Elements in den Einsatz gelöst werden können und dass die rohrförmige Buchse (9) ein Ende (16) hat, dessen Außendurchmesser im Wesentlichen gleich dem Außendurchmesser des Leitungsendes ist und das über den rohrförmigen Einsatz (4) nach außen vorsteht, um vor dem Anbringen der Vorrichtung in der Bohrung des Leitungselements einen Träger für die Dichtung (10) zu bilden.

2. Verbindungsvorrichtung nach Anspruch 1, **dadurch gekennzeichnet, dass** das Ende (16) der rohrförmigen Buchse (9) mit dieser letztgenannten eine äußere Schulter (17) definiert, um Mitnahmemittel zur Mitnahme der rohrförmigen Buchse relativ zum rohrförmigen Einsatz (4) über ein mit der Verbindungsvorrichtung in Eingriff stehendes Leitungsende auszubilden.

3. Verbindungsvorrichtung nach einem der vorhergehenden Ansprüche, **dadurch gekennzeichnet, dass** die Verbindungsmittel (21) nach Art einer Sollbruchstelle ausgebildet sind.

4. Verbindungsvorrichtung nach Anspruch 3, **dadurch gekennzeichnet, dass** die Verbindungsmittel einen Ring (8) umfassen, der auf ein Ende (7) des rohrförmigen Einsatzes (4) aufgerastet und mit der rohrförmigen Buchse (9) über eine Bruchzone (21) verbunden ist.

5. Schnellverbindungsvorrichtung nach einem der vorhergehenden Ansprüche, **dadurch gekennzeichnet, dass** die rohrförmige Buchse (9) außen mit Mitteln (19) für ihre Verankerung in einer Bohrung eines Leitungselements versehen ist, die zur Aufnahme der Verbindungsvorrichtung bestimmt ist.

6. Schnellverbindungsvorrichtung nach einem der vorhergehenden Ansprüche, **dadurch gekennzeichnet, dass** die rohrförmige Buchse (9) in Bezug auf eine Einführrichtung eines Leitungsendes in die Verbindungsvorrichtung stromabwärts der Scheibe (12) mit dem rohrförmigen Einsatz (4) verbunden ist.

7. Schnellverbindungsvorrichtung nach einem der vorhergehenden Ansprüche, **dadurch gekennzeichnet, dass** sie eine Schutzkappe (22) umfasst, die auf lösbare Weise an der Verbindungsvorrichtung angebracht ist, um die Dichtung (10) abzudecken.
